# EUROPÄISCHE PATENTSCHRIFT

(11) **EP 3 568 626 B1**
(45) Veröffentlichungstag und Bekanntmachung des Hinweises auf die Patenterteilung: **03.05.2023**
(21) Anmeldenummer: 17816717.7
(22) Anmeldetag: 12.12.2017
(51) Int. Cl.: F16L 27/12, F16L 19/00, F16B 4/00, F16B 39/34, F16B 39/36

(54) **KUPPLUNGSANORDNUNG FÜR SCHRAUBKUPPLUNG**
COUPLING ARRANGEMENT FOR SCREW COUPLING
ENSEMBLE D'ACCOUPLEMENT POUR UN RACCORD FILETÉ

(30) Priorität: 10.01.2017 DE 102017100357
(43) Veröffentlichungstag der Anmeldung: 20.11.2019
(73) Patentinhaber: Alfred Kärcher SE & Co. KG, 71364 Winnenden (DE)
(72) Erfinder: LANGER, Christian, 86720 Nördlingen (DE); SEITTER, Ralph, 71522 Backnang (DE)
(74) Vertreter: Hoeger, Stellrecht & Partner Patentanwälte mbB
(86) Internationale Anmeldenummer: PCT/EP2017/082361
(87) Internationale Veröffentlichungsnummer: WO 2018/130357

(56) Entgegenhaltungen:
- EP-A1- 3 056 782
- WO-A1-2013/101534
- WO-A1-2015/193164

## Beschreibung

Die Erfindung betrifft eine Kupplungsanordnung für eine Schraubkupplung für Flüssigkeitsleitungen einer Hochdruckreinigungseinrichtung, wobei die Kupplungsanordnung die Merkmale des Oberbegriffs von Patentanspruch 1 aufweist.

Außerdem betrifft die Erfindung eine Schraubkupplung mit einer derartigen Kupplungsanordnung

Schraubkupplungen kommen bei Hochdruckreinigungseinrichtungen zum Einsatz, um Flüssigkeitsleitungen flüssigkeitsdicht miteinander zu verbinden. Mit Hilfe einer Schraubkupplung der hier in Rede stehenden Art kann beispielsweise ein Hochdruckschlauch mit dem Druckauslass eines Hochdruckreinigungsgeräts verbunden werden. Es kann auch eine flüssigkeitsdichte Verbindung zwischen dem Druckschlauch und einer Flüssigkeitsabgabeeinrichtung, beispielsweise einer Spritzpistole, hergestellt werden. Auch eine flüssigkeitsdichte Verbindung zwischen einer Spritzpistole und einer Sprühlanze sowie zwischen einer Sprühlanze und einer Sprühdüse kann mit Hilfe einer derartigen Schraubkupplung hergestellt werden.

Schraubkupplungen für Flüssigkeitsleitungen einer Hochdruckreinigungseinrichtung weisen üblicherweise zwei Kupplungsanordnungen auf, die miteinander verschraubt werden können. Eine erste Kupplungsanordnung umfasst ein erstes Leitungsstück, das zur Herstellung einer flüssigkeitsdichten Verbindung unter Einsatz eines Dichtelements, insbesondere unter Einsatz eines Dichtrings, mit einem zweiten Leitungsstück einer zweiten Kupplungsanordnung verbindbar ist.

Eines der beiden Leitungsstücke kann beispielsweise einen Nippel ausbilden und das andere Leitungsstück kann beispielsweise eine komplementär zum Nippel ausgebildete Hülse ausbilden, wobei der Nippel in die Hülse einführbar und mittels eines Dichtrings flüssigkeitsdicht mit der Hülse verbindbar ist. Der Dichtring kann in einer äußeren Ringnut des Nippels oder auch in einer innen liegenden Ringnut der Hülse angeordnet sein.

Um zu gewährleisten, dass sich die beiden Kupplungsanordnungen nicht unbeabsichtigt voneinander lösen, weisen die Kupplungsanordnungen miteinander zusammenwirkende Gewinde auf, so dass sie miteinander verschraubt werden können. Die Gewinde der Kupplungsanordnungen sind häufig eingängig ausgestaltet und weisen einen sehr kleinen Steigungswinkel auf. Diese Gewinde sind selbsthemmend und stellen sicher, dass sich die beiden Kupplungsanordnungen der Schraubkupplung auch dann nicht voneinander lösen, wenn die von der Hochdruckreinigungseinrichtung geförderte Flüssigkeit einen hohen Druck aufweist, beispielsweise einen Druck von mehr als 100 bar, wobei auch kurzzeitige Druckspitzen von 300 bar auftreten können. Die eingängigen Gewinde haben allerdings den Nachteil, dass sie zur Herstellung einer mechanisch stabilen Schraubverbindung über mehrere Umdrehungen relativ zueinander verdreht werden müssen. Dies macht das Herstellen der Schraubverbindung zeitaufwendig und erschwert die Handhabung der Schraubkupplung.

Aus der Veröffentlichung WO 2015/193164 A1 ist eine Schraubkupplung mit einer gattungsgemäßen Kupplungsanordnung bekannt, die mit einer weiteren Kupplungsanordnung der Schraubkupplung flüssigkeitsdicht verbindbar ist und ein Leitungsstück aufweist mit einem Kanal für eine unter Druck stehende Flüssigkeit. Außerdem weist die Kupplungsanordnung ein mehrgängiges Gewinde zum Verschrauben der Kupplungsanordnung mit der weiteren Kupplungsanordnung der Schraubkupplung und eine Klemmeinrichtung auf, die mit einer Klemmfläche der weiteren Kupplungsanordnung verklemmbar ist. Bei dieser Kupplungsanordnung kommt ein mehrgängiges Gewinde zum Einsatz, das heißt ein Gewinde, bei dem mehrere Gewindegänge parallel zueinander wendelförmig um die Gewindelängsachse verlaufen. Der Einsatz eines mehrgängigen Gewindes hat den Vorteil, dass das Gewinde eine hohe Steigung aufweisen kann, so dass durch eine einzige Umdrehung eine beachtliche axiale Bewegung erzielt werden kann. Eine auf das Gewinde einwirkende Last wird gleichzeitig von mehreren Gewindegängen aufgenommen.

Es kann beispielsweise vorgesehen sein, dass das mehrgängige Gewinde bei einer einzigen Umdrehung eine axiale Bewegung von mindestens 5 mm, insbesondere eine axiale Bewegung von 6 mm ausführt. Dies erleichtert die Handhabung der Kupplungsanordnung beim Herstellen einer flüssigkeitsdichten Verbindung.

Der Benutzer muss bei Einsatz eines mehrgängigen Gewindes das Gewinde beispielsweise nur einmal um eine volle Umdrehung relativ zum Gewinde der weiteren Kupplungsanordnung verdrehen und durch diese einzige Umdrehung wird bereits eine flüssigkeitsdichte Verbindung zwischen dem Leitungsstück der einen Kupplungsanordnung und dem zugeordneten Leitungsstück der weiteren Kupplungsanordnung hergestellt.

Mehrgängige Gewinde sind allerdings in der Regel nicht selbsthemmend, da der Steigungswinkel relativ groß ist. In der WO 2015/193164 A1 wird deshalb vorgeschlagen, die Kupplungsanordnungen nicht nur miteinander zu verschrauben sondern zusätzlich auch zu verklemmen. Die Kupplungsanordnungen weisen hierzu jeweils eine Klemmeinrichtung mit einer Klemmfläche auf und beim Verschrauben der Kupplungsanordnungen werden die Klemmflächen axial ineinander geführt, so dass sie miteinander verklemmen. Die Klemmflächen sind als konische Ringflächen ausgebildet, die komplementär zueinander ausgestaltet sind.

Der Einsatz komplementär zueinander ausgestalteter Klemmflächen ermöglicht es somit eine erste Kupplungsanordnung mit Hilfe eines mehrgängigen Gewindes auf einfache Weise mit einer zweiten Kupplungsanordnung zu verschrauben, ohne dass die Gefahr besteht, dass sich die Schraubverbindung unbeabsichtigt löst. Die Fertigung der Klemmflächen ist allerdings kostenaufwendig, da sie eine große Maßhaltigkeit erfordert, um eine Klemmwirkung sicherzustellen.

Aus der EP 3 056 782 A1 ist eine Schraubkupplung bekannt mit einem ringförmigen Verbindungselement, das an der Außenseite einer ersten Leitung angeordnet ist, und mit einem nach Art eines Überwurfrings ausgestalteten Verriegelungselement. Das Verbindungselement bildet einen Hohlraum aus, in den eine zweite Leitung eingeführt werden kann, um die zweite Leitung mit der ersten Leitung zu verbinden. Das Verriegelungselement umgibt die zweite Leitung und kann auf das Verbindungselement aufgeschraubt werden. Beim Aufschrauben auf das Verbindungselement wird eine an der Innenseite des Verriegelungselements angeordnete ringförmige Dichtlippe zwischen das Verbindungselement und die zweite Leitung eingepresst, das heißt die zweite Leitung drückt die Dichtlippe gegen das Verbindungselement.

Aus der WO 2013/101534 A1 ist eine Kupplungsanordnung bekannt, die mit einer weiteren Kupplungsanordnung verschraubt werden kann. Um ein unbeabsichtigtes Lösen zu vermeiden, kommt bei der Kupplungsanordnung zusätzlich zu einem nach Art einer Überwurfmutter ausgestalteten Verbindungsteil und einem nach Art eines Stecknippels ausgestalteten Steckteil ein Sicherungselement zum Einsatz, das beispielsweise als U-förmige Klammer oder als Kabelbinder ausgestaltet sein kann. Nachdem das Verbindungsteil mit der weiteren Kupplungsanordnung verschraubt wurde, kann das Sicherungselement in Öffnungen des Verbindungsteils eingeführt werden. Teilbereiche des Sicherungselements nehmen dann eine Position in einer Sperrnut der weiteren Kupplungsanordnung ein und werden von einer Lippe des Verbindungsteils hintergriffen. Kommt es zu einer unbeabsichtigten Lösebewegung des Verbindungsteils, dann stößt die Lippe gegen das Sicherungselement, so dass ein weiteres Lösen unterbunden wird.

Aufgabe der vorliegenden Erfindung ist es daher, eine Kupplungsanordnung der eingangs genannten Art derart weiterzubilden, dass sie kostengünstiger hergestellt werden kann.

Diese Aufgabe wird durch eine Kupplungsanordnung mit den Merkmalen von Patentanspruch 1 gelöst.

Bei der erfindungsgemäßen Kupplungsanordnung kommt eine Klemmeinrichtung zum Einsatz mit einem verformbaren Klemmring, der an einer formstabilen Klemmringhalterung gehalten ist. Wird die erfindungsgemäße Kupplungsanordnung mit einer weiteren Kupplungsanordnung der Schraubkupplung verschraubt, so wird der Klemmring gegen die Klemmfläche der weiteren Kupplungsanordnung gepresst und hierbei derart verformt, dass sich der Klemmring an die Form der Klemmfläche der weiteren Kupplungsanordnung anpasst. Der verformbare Klemmring ist an der formstabilen Klemmringhalterung gehalten, so dass er beim Herstellen der Schraubverbindung zwischen der Kupplungsanordnung und der weiteren Kupplungsanordnung verpresst wird. Dadurch wird eine Klemmwirkung erzielt, die einem unbeabsichtigten Lösen der Schraubverbindung entgegenwirkt.

Der Klemmring bildet im verformten Zustand eine konische Ringfläche aus. Die Ringfläche bildet somit einen kegelstumpfförmigen Bereich des Klemmrings aus, mit dem der Klemmring an einer komplementär ausgestalteten kegelstumpfförmigen Klemmfläche der weiteren Kupplungsanordnung anliegt.

Der Einsatz des verformbaren Klemmrings ermöglicht es, die Anforderungen an die Maßhaltigkeit der Klemmeinrichtung zu reduzieren, so dass die Kosten für die Herstellung der erfindungsgemäßen Kupplungsanordnung reduziert werden können.

Die erfindungsgemäße Kupplungsanordnung ist mit der weiteren Kupplungsanordnung der Schraubkupplung lösbar verbindbar. Dies hat den Vorteil, dass die flüssigkeitsdichte Verbindung zwischen der Kupplungsanordnung und der weiteren Kupplungsanordnung der Schraubkupplung bei Bedarf gelöst und zu einem späteren Zeitpunkt erneut hergestellt werden kann.

Das Gewinde der erfindungsgemäßen Kupplungsanordnung ist bevorzugt viergängig ausgestaltet.

Die erfindungsgemäße Kupplungsanordnung weist eine am Leitungsstück gehaltene Verbindungshülse auf, an der das mehrgängige Gewinde angeordnet ist. Mit Hilfe des mehrgängigen Gewindes kann die Verbindungshülse mit einem komplementär ausgestalteten mehrgängigen Gewinde der weiteren Kupplungsanordnung verschraubt werden.

Das mehrgängige Gewinde der Verbindungshülse ist als Innengewinde der Verbindungshülse ausgestaltet.

Gemäß der Erfindung bildet die Klemmringhalterung eine an der Innenseite der Verbindungshülse angeordnete Ringnut aus, in der der Klemmring angeordnet ist. Die Verbindungshülse weist ein mehrgängiges Innengewinde auf, das mit einem komplementär ausgestalteten Außengewinde der weiteren Kupplungsanordnung zusammenwirkt, sowie eine innenliegende Ringnut, in der der Klemmring angeordnet ist. Der innenliegende Klemmring kann beim Verschrauben der Kupplungsanordnung an einer außenliegenden Klemmfläche der weiteren Kupplungsanordnung zur Anlage gelangen und gegen die außenliegende Klemmfläche gepresst werden, wobei sich der Klemmring derart verformt, dass er sich an die Form der außenliegenden Klemmfläche anpasst, so dass ein flächiger Kontakt zwischen dem Klemmring und der Klemmfläche erzielt wird.

Günstig ist es, wenn die Verbindungshülse einen am Leitungsstück frei drehbar gehaltenen Überwurfring ausbildet. Dies erleichtert das Herstellen der Schraubverbindung zwischen der Kupplungsanordnung und der weiteren Kupplungsanordnung der Schraubkupplung.

Der Klemmring ist vorzugsweise derart ausgestaltet, dass er im verformten Zustand einen flächigen Kontakt mit der Klemmfläche ausbildet, der sich kontinuierlich über den gesamten Umfang der Klemmfläche erstreckt.

Bei einer vorteilhaften Ausgestaltung der Erfindung ist die Ringnut an der Innenseite der Verbindungshülse zwischen dem Innengewinde und einer freien Stirnfläche der Verbindungshülse angeordnet. Bei einer derartigen Ausgestaltung ist somit die Ringnut bezogen auf die Schraubrichtung des Innengewindes vor dem Innengewinde an der Innenseite der Verbindungshülse angeordnet. Durch die klemmende Anlage des Klemmrings an der zugeordneten Klemmfläche der weiteren Kupplungsanordnung wird bei einer derartigen Ausgestaltung nicht nur eine Klemmwirkung erzielt, sondern der verformbare Klemmring stellt auch sicher, dass Schmutzpartikel nicht ohne weiteres ausgehend von der freien Stirnfläche der Verbindungshülse zum Innengewinde gelangen können.

Im unverformten Zustand, das heißt vor dem Herstellen einer Schraubverbindung zwischen der Kupplungsanordnung und der weiteren Kupplungsanordnung, weist der Klemmring bei einer vorteilhaften Ausführungsform der Erfindung eine eckige Querschnittsfläche auf, insbesondere eine rechteckige oder trapezförmige Querschnittsfläche.

Eine im unverformten Zustand rechteckförmige Querschnittsfläche des Klemmrings mit zwei parallel zueinander ausgerichteten Längsseiten und mit zwei parallel zueinander und rechtwinklig zu den Längsseiten ausgerichteten Schmalseiten hat sich als besonders vorteilhaft erwiesen. Beim Herstellen einer Schraubverbindung zwischen der Kupplungsanordnung und der weiteren Kupplungsanordnung kann eine der Längs- oder Schmalseiten an einer konisch ausgestalteten Klemmfläche der weiteren Kupplungsanordnung zur Anlage gelangen und sich hierbei an die konische Gestalt der Klemmfläche anpassen, so dass die Querschnittsfläche des Klemmrings ausgehend von einer rechteckförmigen Gestalt durch das Anpressen an die Klemmfläche der weiteren Kupplungsanordnung in eine trapezförmige Gestalt übergeht.

Von Vorteil ist es, wenn der Klemmring mit der Klemmringhalterung formschlüssig verbunden ist. Es kann beispielsweise vorgesehen sein, dass die Klemmringhalterung eine im Querschnitt rechteckförmige Nut ausbildet, die vom Klemmring vollständig ausgefüllt wird, wobei der Klemmring aus der Nut herausragt und in seinem herausragenden Bereich an die Form der Klemmfläche der weiteren Kupplungsanordnung anpassbar ist beim Herstellen einer Schraubverbindung zwischen der Kupplungsanordnung und der weiteren Kupplungsanordnung der Schraubkupplung.

Günstig ist es, wenn der Klemmring in der Klemmringhalterung auswechselbar gehalten ist. Dies ermöglicht es, den Klemmring beispielsweise bei einer Beschädigung auf einfache Weise auszuwechseln, indem er der Klemmringhalterung entnommen und ein neuer Klemmring in die Klemmringhalterung eingesetzt wird.

Bevorzugt ist der Klemmring komprimierbar. Bei einer derartigen Ausgestaltung kann der Klemmring beim Herstellen der Schraubverbindung zwischen der Kupplungsanordnung und der weiteren Kupplungsanordnung zusammengedrückt werden und dadurch seine Form an die Form der zugeordneten Klemmfläche der weiteren Kupplungsanordnung anpassen.

Der Klemmring ist günstigerweise elastisch verformbar und insbesondere komprimierbar.

Bei einer vorteilhaften Ausgestaltung der Erfindung besteht der Klemmring aus Kunststoff, insbesondere aus einem Polyurethanmaterial.

Bevorzugt weist der Klemmring eine Shorehärte von mindestens 70 Shore A auf, insbesondere eine Shorehärte im Bereich von 75 Shore A bis 95 Shore A, beispielsweise 85 Shore A. Eine derartige Härte ermöglicht es, den Klemmring beim Herstellen der Schraubverbindung zwischen der Kupplungsanordnung und der weiteren Kupplungsanordnung so zu verformen, dass er sich an die Form der Klemmfläche der weiteren Kupplungsanordnung anpasst, wobei außerdem sichergestellt ist, dass der verformte Klemmring eine ausreichende Klemmwirkung erzeugt, um ein unbeabsichtigtes Lösen der Schraubverbindung zu verhindern.

Die Erfindung betrifft auch eine Schlauchkupplung für Flüssigkeitsleitungen einer Hochdruckreinigungseinrichtung mit einer ersten Kupplungsanordnung der voranstehend erläuterten Art und mit einer zweiten Kupplungsanordnung, die mit der ersten Kupplungsanordnung flüssigkeitsdicht verbindbar ist, wobei die zweite Kupplungsanordnung ein zweites Leitungsstück mit einem Kanal für unter Druck stehende Flüssigkeit aufweist und ein zweites mehrgängiges Gewinde, das mit dem mehrgängigen ersten Gewinde der ersten Kupplungsanordnung zusammenwirkt, sowie eine mit dem verformbaren Klemmring der ersten Kupplungsanordnung zusammenwirkende, formstabile Klemmfläche. Wird die erste Kupplungsanordnung mit der zweiten Kupplungsanordnung der Schraubkupplung verschraubt, so wird der Klemmring der ersten Kupplungsanordnung gegen die Klemmfläche der zweiten Kupplungsanordnung gepresst, wobei er sich verformt und an die Gestalt der Klemmfläche anpasst. Dadurch wird eine Klemmwirkung erzeugt, die ein unbeabsichtigtes Lösen der Schraubverbindung zwischen den beiden Kupplungsanordnungen verhindert.

Bei einer vorteilhaften Ausgestaltung der erfindungsgemäßen Schraubkupplung bildet eines der beiden Leitungsstücke der Schraubkupplung einen Nippel aus, der unter Zwischenlage eines Dichtelements, insbesondere eines Dichtrings, in einen hülsenförmigen Aufnahmebereich des anderen Leitungsstücks einführbar ist.

Bevorzugt ist am Leitungsstück der ersten Kupplungsanordnung eine Verbindungshülse, insbesondere ein Überwurfring, gehalten mit einem mehrgängigen Innengewinde und einer innenliegenden Ringnut, in der der Klemmring angeordnet ist, und das Leitungsstück der zweiten Kupplungsanordnung weist ein Außengewinde und eine außenliegende, insbesondere konisch ausgestaltete Klemmfläche auf. Die Verbindungshülse kann auf das zweite Leitungsstück aufgeschraubt werden, wobei der innenliegende Klemmring der ersten Kupplungsanordnung an der außenliegenden Klemmfläche der zweiten Kupplungsanordnung zur Anlage gelangt und verformt wird, so dass er eine Klemmwirkung erzeugt, die ein unbeabsichtigtes Lösen der Schraubverbindung zwischen den beiden Kupplungsanordnungen verhindert.

Die nachfolgende Beschreibung einer vorteilhaften Ausführungsform der Erfindung dient im Zusammenhang mit der Zeichnung der näheren Erläuterung. Es zeigen:
- Figur 1:: eine schematische Längsschnittansicht einer Schraubkupplung mit einer ersten Kupplungsanordnung und einer zweiten Kupplungsanordnung, die miteinander verschraubt und verklemmt sind;
- Figur 2:: eine vergrößerte Darstellung von Detail A aus Figur 1, wobei ein Leitungsstück mit einem Nippel der ersten Kupplungsanordnung ausgeblendet ist;
- Figur 3:: eine vergrößerte Darstellung entsprechend Figur 2 vor dem Verschrauben und Verklemmen der beiden Kupplungsanordnungen.

In der Zeichnung ist eine vorteilhafte Ausführungsform einer erfindungsgemäßen Schraubkupplung schematisch dargestellt, die insgesamt mit dem Bezugszeichen 10 belegt ist. Die Schraubkupplung umfasst eine erfindungsgemäße erste Kupplungsanordnung 12 und eine zweite Kupplungsanordnung 14, die auf einfache Weise und bevorzugt ohne spezielles Werkzeug flüssigkeitsdicht miteinander verschraubt und verklemmt und bei Bedarf auch wieder voneinander getrennt werden können.

Die erste Kupplungsanordnung 12 weist ein erstes Leitungsstück 16 auf mit einem Durchgangskanal 18. Das erste Leitungsstück 16 bildet einen Nippel 20 aus. An das dem Nippel 20 abgewandte hintere Ende 22 des Leitungsstücks 16 ist im dargestellten Ausführungsbeispiel ein an sich bekanntes und deshalb in der Zeichnung zur Erzielung einer besseren Übersicht nur ausschnittsweise dargestelltes Strahlrohr 24 angeschlossen. Der Nippel 20 weist in geringem Abstand zu seiner freien Stirnfläche 26 eine erste Ringnut 28 auf, in der ein Dichtring 30 angeordnet ist, und in einem Bereich zwischen dem Nippel 20 und dem Strahlrohr 24 weist das erste Leitungsstück 26 eine außenliegende Umfangsnut 32 auf.

Die erste Kupplungsanordnung 12 weist außerdem eine Verbindungshülse 34 auf, die im dargestellten Ausführungsbeispiel als Überwurfring 36 ausgestaltet ist. Der Überwurfring 36 umfasst eine Umfangswand 38, die den Nippel 20 unter Ausbildung eines Ringraums 40 umgibt und an die sich eine vom ersten Leitungsstück 16 durchgriffene Rückwand 42 anschließt, die in die Umfangsnut 32 eintaucht. Der Überwurfring 36 ist in der Umfangsnut 32 frei drehbar und in axialer Richtung praktisch unverschiebbar gelagert.

In geringem Abstand zur Rückwand 42 ist an der Innenseite 44 der Umfangswand 38 ein mehrgängiges Innengewinde 46 angeordnet. Im dargestellten Ausführungsbeispiel ist das Innengewinde 46 viergängig ausgestaltet.

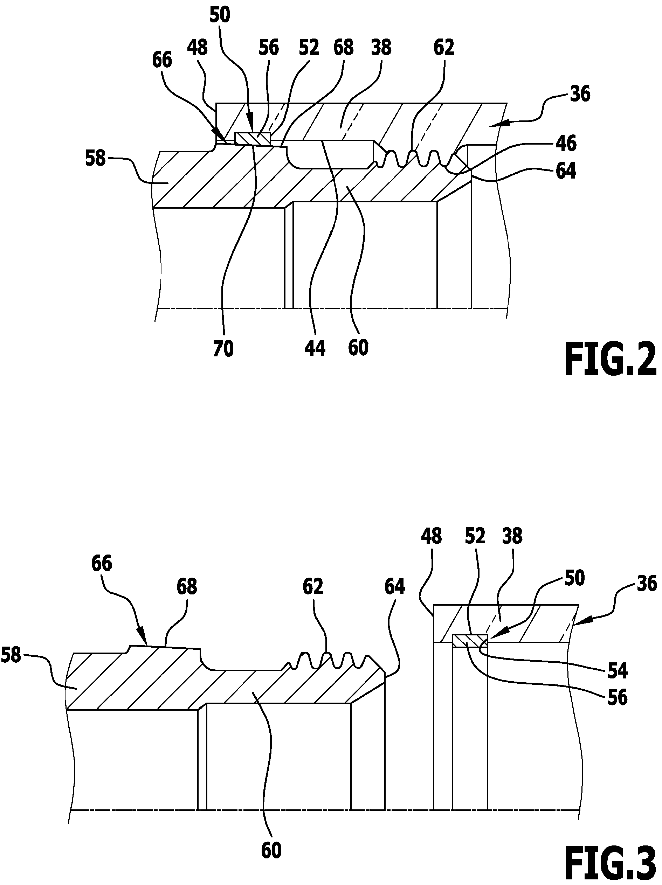

Der Rückwand 42 abgewandt weist der Überwurfring 36 eine freie Stirnfläche 48 auf. Im Bereich zwischen dem Innengewinde 46 und der freien Stirnfläche 48 ist an der Innenseite 44 der Umfangswand 38 eine Klemmeinrichtung 50 angeordnet, die in den Figuren 2 und 3 vergrößert dargestellt ist. Die Klemmringeinrichtung 50 umfasst eine Klemmringhalterung 52, die im dargestellten Ausführungsbeispiel als zweite Ringnut 54 ausgebildet ist, und einen Klemmring 56, der in der zweiten Ringnut 54 gehalten ist.

Der Klemmring 56 ist elastisch komprimierbar und verformbar. Im dargestellten Ausführungsbeispiel besteht der Klemmring 56 aus Kunststoff, insbesondere aus einem Polyurethanmaterial. Der Klemmring 56 weist im dargestellten Ausführungsbeispiel eine Härte von 85 Shore A auf.

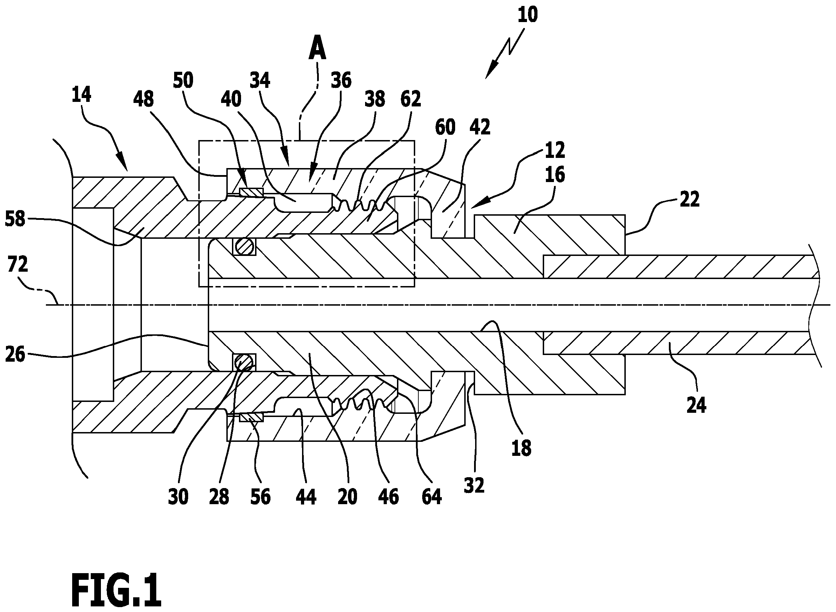

Die zweite Kupplungsanordnung 14 weist ein zweites Leitungsstück 58 auf mit einem Durchgangskanal und einem hülsenförmigen Aufnahmebereich 60, in den der Nippel 20 der ersten Kupplungsanordnung 12 unter Zwischenlage des Dichtrings 30 eingeführt werden kann, wie dies in Figur 1 dargestellt ist. Auf seiner Außenseite trägt das zweite Leitungsstück 58 ein komplementär zum viergängigen Innengewinde 46 der ersten Kupplungsanordnung 12 ausgestaltetes viergängiges Außengewinde 62, das in geringem Abstand zum freien Ende 64 des hülsenförmigen Aufnahmebereichs 60 angeordnet ist. Im Abstand zum Außengewinde 62 weist das zweite Leitungsstück 58 auf seiner Außenseite einen Außenkonus 66 auf, der eine konische Klemmfläche 68 ausbildet. Der Außendurchmesser des Außenkonus 66 vergrößert sich kontinuierlich mit zunehmendem Abstand vom freien Ende 64 des Aufnahmebereichs 60.

Beim Einsetzen des Nippels 20 in den Aufnahmebereich 60taucht das zweite Leitungsstück 58 in den Ringraum 40 zwischen dem Nippel 20 und dem Überwurfring 36 ein und das Außengewinde 62 kann mit dem Innengewinde 46 verschraubt werden. Der elastisch verformbare und komprimierbare Klemmring 56 kommt an der konischen Klemmfläche 68 zur Anlage und wird zunehmend verformt, wobei er sich an die Form der Klemmfläche 68 anpasst und zwischen das zweite Leitungsstück 58 und den Überwurfring 36 eingepresst wird.

Der Klemmring 56 weist in seinem in Figur 3 dargestellten unverformten Zustand eine rechteckförmige Querschnittsfläche auf. Durch Anpressen an die Klemmfläche 68 verformt sich der Klemmring 56 derart, dass er in dem in Figur 2 dargestellten verformten Zustand eine trapezförmige Gestalt aufweist, wobei er mit einer konischen Ringfläche 70 an der Klemmfläche 68 flächig anliegt. Die konische Ringfläche 70 ist komplementär zur konischen Klemmfläche 68 ausgestaltet und koaxial zur Längsachse 72 der beiden Leitungsstücke 16 und 58 ausgerichtet, wobei die Längsachse 72 auch eine Gewindelängsachse des Innengewindes 46 und des Außengewindes 62 ausbildet.

Wie insbesondere aus den Figuren 2 und 3 deutlich wird, ist die zweite Ringnut 54 im Querschnitt rechteckförmig ausgebildet und der Klemmring 56 ist mit der zweiten Ringnut 54 formschlüssig verbunden, indem er die zweite Ringnut 54 vollständig ausfüllt. In einem aus der zweiten Ringnut 54 herausragenden Bereich bildet der Klemmring 56 die im verformten Zustand konisch ausgebildete Ringfläche 70 aus.

Der Klemmring 56 ist bevorzugt auswechselbar in der zweiten Ringnut 54 gehalten, so dass er bei einer Beschädigung auf einfache Weise ausgewechselt werden kann.

Da das Innengewinde 46 und das Außengewinde 62 viergängig ausgestaltet sind, kann auf einfache Weise eine flüssigkeitsdichte Schraubverbindung zwischen der ersten Kupplungsanordnung 12 und der zweiten Kupplungsanordnung 14 hergestellt werden, und durch den Einsatz des Klemmrings 56 und der Klemmfläche 68 kann eine Klemmwirkung erzeugt werden, die ein unbeabsichtigtes Lösen der Schraubverbindung verhindert. Die Anforderungen an die Maßhaltigkeit der formstabilen Klemmfläche 68 und der formstabilen Klemmringhalterung 52 können verhältnismäßig gering gehalten werden. Dies erlaubt eine kostengünstige Herstellung der beiden Kupplungsanordnungen 12 und 14 und damit auch der gesamten Schlauchkupplung 10.

## Patentansprüche

1. Kupplungsanordnung für eine Schraubkupplung (10) für Flüssigkeitsleitungen einer Hochdruckreinigungseinrichtung, wobei die Kupplungsanordnung (12) mit einer weiteren Kupplungsanordnung (14) der Schraubkupplung (10) flüssigkeitsdicht verbindbar ist und ein Leitungsstück (16) aufweist mit einem Kanal (18) für eine unter Druck stehende Flüssigkeit, und wobei die Kupplungsanordnung (12) ein mehrgängiges Gewinde (46) aufweist zum Verschrauben der Kupplungsanordnung (12) mit der weiteren Kupplungsanordnung (14) der Schraubkupplung (10), und wobei die Kupplungsanordnung (12) eine Klemmeinrichtung (50) aufweist, die mit einer Klemmfläche (68) der weiteren Kupplungsanordnung (14) verklemmbar ist, wobei die Klemmeinrichtung (50) eine formstabile Klemmringhalterung (52) aufweist, an der ein Klemmring (56) gehalten ist, und wobei der Klemmring (56) durch Anpressen an die Klemmfläche (68) der weiteren Kupplungsanordnung (14) verformbar ist und an die Form der Klemmfläche (68) anpassbar ist, wobei der Klemmring (56) im verformten Zustand eine konische Ringfläche (70) ausbildet, wobei die Kupplungsanordnung (12) eine am Leitungsstück (16) gehaltene Verbindungshülse (34) aufweist, an der das mehrgängige Gewinde (46) angeordnet ist, wobei das Gewinde als Innengewinde (46) der Verbindungshülse (34) ausgestaltet ist, **dadurch gekennzeichnet, dass** die Klemmringhalterung (52) eine an der Innenseite (44) der Verbindungshülse (34) angeordnete Ringnut (54) ausbildet, in der der Klemmring (56) angeordnet ist.

2. Kupplungsanordnung nach Anspruch 1, **dadurch gekennzeichnet, dass** die Verbindungshülse (34) einen am Leitungsstück (16) frei drehbar gehaltenen Überwurfring (36) ausbildet.

3. Kupplungsanordnung nach Anspruch 1 oder 2, **dadurch gekennzeichnet,**
**dass** die Ringnut (54) zwischen dem Innengewinde (46) und einer freien Stirnfläche (48) der Verbindungshülse (34) angeordnet ist.

4. Kupplungsanordnung nach einem der voranstehenden Ansprüche,
**dadurch gekennzeichnet, dass** die konische Ringfläche (70) koaxial zur Gewindelängsachse (72) des Gewindes (46) ausgerichtet ist.

5. Kupplungsanordnung nach einem der voranstehenden Ansprüche,
**dadurch gekennzeichnet, dass** der Klemmring (56) im unverformten Zustand eine eckige Querschnittsfläche aufweist, insbesondere eine rechteckige oder trapezförmige Querschnittsfläche.

6. Kupplungsanordnung nach einem der voranstehenden Ansprüche,
**dadurch gekennzeichnet, dass** der Klemmring (56) mit der Klemmringhalterung (52) formschlüssig verbunden ist.

7. Kupplungsanordnung nach einem der voranstehenden Ansprüche,
**dadurch gekennzeichnet, dass** der Klemmring (56) an der Klemmringhalterung (52) auswechselbar gehalten ist.

8. Kupplungsanordnung nach einem der voranstehenden Ansprüche,
**dadurch gekennzeichnet, dass** der Klemmring (56) elastisch verformbar ist.

9. Kupplungsanordnung nach einem der voranstehenden Ansprüche,
**dadurch gekennzeichnet, dass** der Klemmring (56) komprimierbar ist.

10. Kupplungsanordnung nach einem der voranstehenden Ansprüche,
**dadurch gekennzeichnet, dass** der Klemmring (56) aus Kunststoff besteht, insbesondere aus einem Polyurethanmaterial.

11. Kupplungsanordnung nach einem der voranstehenden Ansprüche,
**dadurch gekennzeichnet, dass** der Klemmring (56) eine Härte von mindestens 70 Shore A aufweist, insbesondere eine Härte im Bereich von 75 Shore A bis 95 Shore A, beispielsweise 85 Shore A.

12. Schlauchkupplung für Flüssigkeitsleitungen einer Hochdruckreinigungseinrichtung mit einer ersten Kupplungsanordnung (12) nach einem der voranstehenden Ansprüche und mit einer zweiten Kupplungsanordnung (14), die mit der ersten Kupplungsanordnung (12) flüssigkeitsdicht verbindbar ist, wobei die zweite Kupplungsanordnung (14) ein zweites Leitungsstück (58) mit einem Kanal für unter Druck stehende Flüssigkeit aufweist und ein zweites mehrgängiges Gewinde (62), das mit dem Gewinde (46) der ersten Kupplungsanordnung (12) zusammenwirkt, sowie eine mit dem Klemmring (56) der ersten Kupplungsanordnung (12) zusammenwirkende, formstabile Klemmfläche (68).

## Claims

1. Coupling arrangement for a screw coupling (10) for liquid conduits of a high-pressure cleaning device, wherein the coupling arrangement (12) is connectable in a liquid-tight manner to a further coupling arrangement (14) of the screw coupling (10) and comprises a conduit piece (16) having a channel (18) for a liquid under pressure, and wherein the coupling arrangement (12) comprises a multi-start thread (46) for screwing the coupling arrangement (12) to the further coupling arrangement (14) of the screw coupling (10), and wherein the coupling arrangement (12) comprises a clamping device (50) which is clampable to a clamping face (68) of the further coupling arrangement (14), wherein the clamping device (50) comprises a dimensionally stable clamping ring mount (52) on which a clamping ring (56) is held, and wherein the clamping ring (56) is deformable and is adaptable to the shape of the clamping face (68) by pressing onto the clamping face (68) of the further coupling arrangement (14), wherein the clamping ring (56) in the deformed state forms a conical annular face (70), wherein the coupling arrangement (12) comprises a connecting sleeve (34) which is held on the conduit piece (16) and on which the multi-start thread (46) is arranged, wherein the thread is configured as an internal thread (46) of the connecting sleeve (34), **characterized in that** the clamping ring mount (52) forms an annular groove (54) which is arranged on the inside (44) of the connecting sleeve (34) and in which the clamping ring (56) is arranged.

2. Coupling arrangement in accordance with Claim 1, **characterized in that** the connecting sleeve (34) forms a screw collar ring (36) which is held on the conduit piece (16) so as to be freely rotatable.

3. Coupling arrangement in accordance with Claim 1 or 2, **characterized in that** the annular groove (54) is arranged between the internal thread (46) and a free end face (48) of the connecting sleeve (34).

4. Coupling arrangement in accordance with any one of the preceding Claims, **characterized in that** the conical annular face (70) is aligned coaxially to the thread longitudinal axis (72) of the thread (46).

5. Coupling arrangement in accordance with any one of the preceding Claims, **characterized in that** the clamping ring (56) in the undeformed state has an angular cross sectional area, in particular a rectangular or trapezoidal cross-sectional area.

6. Coupling arrangement in accordance with any one of the preceding Claims, **characterized in that** the clamping ring (56) is connected to the clamping ring mount (52) in a positively-fitting manner.

7. Coupling arrangement in accordance with any one of the preceding Claims, **characterized in that** the clamping ring (56) is replaceably held on the clamping ring mount (52).

8. Coupling arrangement in accordance with any one of the preceding Claims, **characterized in that** the clamping ring (56) is elastically deformable.

9. Coupling arrangement in accordance with any one of the preceding Claims, **characterized in that** the clamping ring (56) is compressible.

10. Coupling arrangement in accordance with any one of the preceding Claims, **characterized in that** the clamping ring (56) consists of plastic, in particular of a polyurethane material.

11. Coupling arrangement in accordance with any one of the preceding Claims, **characterized in that** the clamping ring (56) has a hardness of at least 70 shore A, in particular a hardness in the range of 75 shore A to 95 shore A, for example 85 shore A.

12. Hose coupling for liquid conduits of a high-pressure cleaning device, said coupling having a first coupling arrangement (12) in accordance with any one of the preceding Claims and having a second coupling arrangement (14) which is connectable in a liquid-tight manner to the first coupling arrangement (12), wherein the second coupling arrangement (14) comprises a second conduit piece (58) having a channel for liquid under pressure, and a second multi-start thread (62) which cooperates with the thread (46) of the first coupling arrangement (12), and a dimensionally stable clamping face (68) cooperating with the clamping ring (56) of the first coupling arrangement (12).

## Revendications

1. Ensemble de couplage pour un raccord de tuyau (10) destiné à des conduites de liquide d'un dispositif de nettoyage à haute pression, dans lequel l'ensemble de couplage (12) peut être relié à un autre ensemble de couplage (14) du raccord de tuyau (10) de manière étanche aux liquides et présente une partie de conduite (16) comprenant un canal (18) destiné à un liquide sous pression, et dans lequel l'ensemble de couplage (12) présente un filetage à plusieurs filets (46) afin de visser l'ensemble de couplage (12) avec l'autre ensemble de couplage (14) du raccord de tuyau (10), et dans lequel l'ensemble de couplage (12) présente un dispositif de serrage (50) pouvant être bloqué avec une surface de serrage (68) de l'autre ensemble de couplage (14), dans lequel le dispositif de serrage (50) présente une fixation de bague de serrage (52) indéformable sur laquelle est retenue une bague de serrage (56), et dans lequel la bague de serrage (56) peut être déformée et adaptée à la forme de la surface de serrage (68) par pression contre la surface de serrage (68) de l'autre ensemble de couplage (14), dans lequel la bague de serrage (56), à l'état déformé, forme une surface annulaire conique (70), dans lequel l'ensemble de couplage (12) présente un manchon de liaison (34) retenu au niveau de la partie de conduite (16) et au niveau duquel est agencé le filetage à plusieurs filets (46) , dans lequel le filetage est réalisé sous la forme d'un filetage intérieur (46) du manchon de liaison (34), **caractérisé en ce que** la fixation de bague de serrage (52) forme une rainure annulaire (54) agencée au niveau de la face intérieure (44) du manchon de liaison (34) et dans laquelle est agencée la bague de serrage (56).

2. Ensemble de couplage selon la revendication 1, **caractérisé en ce que** le manchon de liaison (34) forme une bague de raccordement (36) retenue de manière à pouvoir tourner librement au niveau de la partie de conduite (16).

3. Ensemble de couplage selon la revendication 1 ou 2, **caractérisé en ce que** la rainure annulaire (54) est agencée entre le filetage intérieur (46) et une surface frontale libre (48) du manchon de liaison (34).

4. Ensemble de couplage selon l'une quelconque des revendications précédentes, **caractérisé en ce que** la surface annulaire conique (70) est orientée de manière coaxiale par rapport à l'axe longitudinal (72) du filetage (46).

5. Ensemble de couplage selon l'une quelconque des revendications précédentes, **caractérisé en ce que** la bague de serrage (56) présente, à l'état non déformé, une surface de section transversale présentant des angles, en particulier une surface de section transversale rectangulaire ou trapézoïdale.

6. Ensemble de couplage selon l'une quelconque des revendications précédentes, **caractérisé en ce que** la bague de serrage (56) est reliée par complémentarité de forme à la fixation de bague de serrage (52).

7. Ensemble de couplage selon l'une quelconque des revendications précédentes, **caractérisé en ce que** la bague de serrage (56) est retenue au niveau de la fixation de bague de serrage (52) de manière à pouvoir être remplacée.

8. Ensemble de couplage selon l'une quelconque des revendications précédentes, **caractérisé en ce que** la bague de serrage (56) est élastiquement déformable.

9. Ensemble de couplage selon l'une quelconque des revendications précédentes, **caractérisé en ce que** la bague de serrage (56) est compressible.

10. Ensemble de couplage selon l'une quelconque des revendications précédentes, **caractérisé en ce que** la bague de serrage (56) est réalisée en matière plastique, en particulier en un matériau polyuréthane.

11. Ensemble de couplage selon l'une quelconque des revendications précédentes, **caractérisé en ce que** la bague de serrage (56) présente une dureté d'au moins 70 Shore A, en particulier une dureté située dans la plage comprise entre 75 Shore A et 95 Shore A, par exemple de 85 Shore A.

12. Raccord de tuyau destiné à des conduites de liquide d'un dispositif de nettoyage à haute pression comprenant un premier ensemble de couplage (12) selon l'une quelconque des revendications précédentes et un second ensemble de couplage (14) pouvant être relié au premier ensemble de couplage (12) de manière étanche aux liquides, dans lequel le second ensemble de couplage (14) présente une seconde partie de conduite (58) comprenant un canal destiné à un liquide sous pression et un second filetage à plusieurs filets (62) coopérant avec le filetage (46) du premier ensemble de couplage (12), ainsi qu'une surface de serrage (68) indéformable coopérant avec la bague de serrage (56) du premier ensemble de couplage (12).
